# EUROPEAN PATENT APPLICATION

(11) **EP 2 635 087 A1**
(43) Date of publication of application: **04.09.2013**
(21) Application number: 12305240.9
(22) Date of filing: 28.02.2012
(51) Int. Cl.: H04W 88/08, H04B 7/02, H04B 1/00

(54) **Apparatus, method and computer program for controlling transmission points in a mobile communication system**

(71) Applicant: Alcatel Lucent, 75007 Paris (FR)
(72) Inventor: Boccardi, Federico, 20063 Cernusco Sul Naviglio (MI) (IT); Aydin, Osman, 70569 Stuttgart (DE); Doetsch, Uwe, 74392 Freudental (DE); Fahldieck, Torsten, 71254 Ditzingen (DE)
(74) Representative: 2SPL Patentanwälte

(57) **Abstract**

Embodiments provide an apparatus, a method and a computer program for controlling transmission points in a mobile communication system. The apparatus 10 for controlling transmission points 20, 22 in a mobile communication system comprises means for dynamically allocating 12 a cluster of transmission points for joint communication with the mobile transceiver 100 to a set of processing resources 30 to commonly process the radio signals communicated with the mobile transceiver 100. The cluster of transmission points corresponding to a set of one or more transmission points 20, 22.

## Description

Embodiments of the present invention relate to communication networks, more particularly but not exclusively to processing resource allocation in mobile communication networks.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. As operators are seeking to extend the coverage and capacity of their networks advanced transmission concepts are one way forward.

Some of these advanced transmission concepts may include joint user scheduling, i.e. users or mobile transceivers of a communication network are jointly scheduled for data transmission and/or reception. Cell clustering is another concept wherein cells are grouped or clustered for simultaneous transmission to a mobile transceiver, which may then take advantage of diversity and combining gains. Moreover, advanced antenna concepts, such as beamforming and Multiple-Input-Multiple-Output (MIMO) transmission, may use precoding coefficient calculation methods, which consider multiple transceivers. In some concepts a central logical entity may jointly form clusters of coordinated cells, select users and calculate beamforming coefficients and power allocations.

### Summary

Embodiments are based on the finding that advanced transmission concepts can be combined with cloud architectures. For example, a Radio Access Network (RAN) of a mobile communication system may be implemented as a Cloud-RAN (C-RAN). In a C-RAN advantage may be taken of cloud computing, i.e. processing resources are provided at centralized network entities and radio front ends are provided as remote units or transmission points. The transmission points can be coupled with the central units comprising the processing resources using high capacity data lines, such as optical fiber. The processing resources at the centralized network entity are also referred to as Base Band Units (BBU) or base band processing units. The Transmission Points (TP) comprise the radio front ends and may operate one or more antennas for transmitting and receiving radio signals.

Some embodiments are further based on the finding that in conventional architectures a separated protocol stack is implemented for each cell of a mobile communication system. Furthermore, using such architecture a joint reception (transmission) from multiple TPs would involve the signal of a given user or mobile transceiver to be decoded by different BBUs over different protocol stacks.

Embodiments provide an apparatus for controlling transmission points in a mobile communication system, i.e. embodiments may provide said apparatus to be operated by or included in a base station transceiver or a network entity. The mobile communication system may, for example, correspond to one of the mobile communication systems standardized by the 3^{rd} Generation Partnership Project (3GPP), as Global System for Mobile Communications (GSM), Enhanced Data rates for GSM Evolution (EDGE), GSM EDGE Radio Access Network (GERAN), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

In embodiments, the mobile communication system may comprise mobile transceivers and base station transceivers. A mobile transceiver may correspond to a smartphone, a cell phone, user equipment, a laptop, a notebook, a personal computer, a Personal Digital Assistant (PDA), an Universal Serial Bus (USB) -stick, a car, etc. A mobile transceiver may also be referred to as User Equipment (UE) in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system comprises a plurality of transmission points operable to communicate radio signals with a mobile transceiver. Moreover, the mobile communication system comprises a plurality of processing resources operable to process the radio signals communicated with the mobile transceiver. The apparatus for controlling transmission points comprises means for dynamically allocating a cluster of transmission points for joint communication with the mobile transceiver to a set of processing resources to commonly process the radio signals communicated with the mobile transceiver, the cluster of transmission points corresponding to one or more transmission points. In embodiments a cluster may comprise a set of two or more transmission points.

That is to say, the apparatus may assign processing resources to a cluster of transmission points. The cluster of transmission points is formed to communicate jointly with a mobile transceiver, i.e. the transmission points of the cluster transmit cooperatively to the mobile transceiver. Moreover, the cluster of transmission points is associated to processing resources, which process the signals communicated with the mobile transceiver. In embodiments a transmission point may comprise a radio front end and the plurality of transmission points establishes a radio coverage structure, which may be cellular in some embodiments, for communicating the radio signals with the mobile transceiver. The plurality of processing resources can be located at a central base band processing unit, which is coupled to the plurality of transmission points.

Embodiments may enable dynamic Cooperative MultiPoint (CoMP) coordination between different transmissions points connected to the same C-RAN base band pool, wherein the base band pool comprises the respective processing resources. In embodiments the means for dynamically allocating can be operable to allocate the set of processing resources to process at least a part of a common base band protocol stack of the cluster of transmission points for the mobile transceiver. In other embodiments the common base band protocol stack of the cluster may be processed by the set of processing resources. In other words, the dynamic allocation may allow gathering all TP, which participate in a CoMP transmission to a certain user, in a cluster, which can be commonly processed by the same resources and therefore suffices a single protocol stack.

TPs can be grouped in clusters, and a given TP can belong to different clusters. That is to say, the means for dynamically allocating can be operable to allocate at least one transmission point to at least two different clusters of transmission points such that the at least two different clusters of transmission points are operable to communicate with at least two mobile transceivers. The means for dynamically allocating can further be operable to allocate at least one transmission point to at least two different sets of processing resources. The means for dynamically allocating can further be operable to allocate two different clusters of transmission points to the same set of processing resources for joint communication to at least two mobile transceivers. That is to say, the same processing resources can also be allocated to different clusters.

In embodiments the clusters can be UE-specific and can be dynamically formed as a function of the users or mobile transceivers to be scheduled. The apparatus may further comprise means for determining the cluster of transmission points for jointly communicating with the mobile transceiver based on radio conditions specific to the mobile transceiver. That is to say, the means for determining may be operable to receive feedback information from the mobile transceiver and may determine the transmission points for the cluster based on the feedback information. In embodiments, such feedback information may comprise parameters or measurement results like channel state information, channel quality indicator, buffer status and so on.

In embodiments, the means for dynamically allocating can be operable to allocate virtual resources of a centralized base band processing unit to the cluster of transmission points. That is to say, virtualization techniques may be used in order to dynamically allocate clusters to hardware resources, which may, for example, be in charge of the Base Band (BB) processing. In other words, embodiments may therewith not need to statically allocate HW resources to a given cluster. Therefore joint processing within a set of transmission points may be realized just by activating an instantiation of a virtual base band chain and by allocating it to a proper set of hardware resources in the pool. Hence, a centralized BB processing pool may be available, such as a cloud of processors, a farm of processors, etc. The processing hardware may be subdivided in virtual resources such as processes, threads, etc. The virtual resources can then allocated to the cluster, where the cluster sizes and the transmission scheme, the data rate, the number of radio bearers etc. may determine how many of the processing resources are needed for a particular cluster, user, respectively.

In embodiments architecture may be used, in which the concept of 'cell' is redefined and replaced by the concept of CoMP clusters. It is a further finding of embodiments that the processing resources can be dynamically allocated to sets of transmission points or clusters. These processing resources can be used for jointly transmitting to (or receiving from) a given set of users, i.e. one or more mobile transceivers.

In embodiments a given TP can be dynamically allowed to be associated to different TP sets and can be accordingly dynamically allocated to different sets of processing resources. In other words, processing resources can be dynamically allocated to the pool or CoMP clusters, in a way proportional to the cluster's load. Embodiments may therewith drop the concept of "anchor" TP as from today's 3GPP Release 10 LTE. Embodiments may redefine the pilot structure in a way that the UE may not distinguish between the different TPs. In other words, the means for dynamically allocating can be operable to provide an identification to the cluster of transmission points such that the transmission points of the cluster appear with the same identification to the mobile transceiver. In some embodiments, the cell as the elementary processing unit may be dropped and replaced by a Transmission Point Cluster (TPC), i.e. the set of TPs jointly serving a user or a set of users.

A TP may belong to multiple TPC clusters. That is to say, different users or mobile transceivers can be served by different TPC, where the TPC may not differ in all TPs belonging to them, some TP can belong to multiple TPC. Hence, the means for dynamically allocating can be operable to provide at least two different identifications to a TP, which belongs to at least two clusters of TPs. The identification may correspond to information on a scrambling sequence used for a pilot signal broadcast by a TP. In embodiments, a mobile transceiver apparatus can be associated to a TP, a TPC, or a base station transceiver, which can be composed of at least one TP and corresponding BB processing resources.

The mobile transceiver can be associated with the TPC, which may establish a TPC-cell. A TPC-cell may differ from a conventional cell, the TPC-cell may be established by multiple TPs. The term cell refers to a coverage area of radio services provided by a TPC, a TP, a base station transceiver or a NodeB, an eNodeB, respectively. In some embodiments a cell may correspond to a sector. For example, sectors can be achieved using sector antennas, which provide a characteristic for covering an angular section around a TP or base station transceiver. In some embodiments, a TP may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection. The means for dynamically allocating can be operable to allocate one or more cell identifications of cells of the mobile communication system to a TP.

A cell is thus operated by one or more TPs and can be seen as a coverage area, which can be identified through reference or broadcast channels with a respective identification, as, for example, a pilot channel. Before a mobile transceiver can transmit payload data to a cell, it has to register, associate or connect with a cell. A mobile transceiver not registered with a cell is in a so called idle mode, a registered mobile transceiver is in active or connected mode. One prominent protocol of the 3GPP specifications is the Radio Resource Control (RRC) protocol, cf. Technical Specification (TS) 25.331 / 36.331 series of 3GPP specifications. RRC specifies multiple procedures for radio resource management of a mobile transceiver, as handover signaling, measurement configuration, cell reselection, reconfiguration, etc. Once a mobile transceiver has established an RRC connection to the respective network entity, e. g. a TP, a NodeB, a Radio Network Controller (RNC), an eNodeB, etc., the network entity can trigger the respective procedures, which is why an associated mobile transceiver is also be referred to as in RRC connected mode when associated to a TP.

In further embodiments the means for dynamically allocating can be operable to allocate different processing resources for control channel processing of the mobile transceiver and to data channel processing of the mobile transceiver. That is to say, the services provided by the communication network may be subdivided in services provided by different protocol layers and services provided in the user-plane or in the control-plane. Moreover, a UE may establish multiple protocol contexts in order to exchange control and payload data with the network. One example of a protocol context or service is called radio bearer, which provides protocol services through the lower protocol layers of a RAN. In some embodiments processing resources may be allocated on the granularity of a radio bearer, for example, embodiments may distinguish signaling or control radio bearers and the means for dynamically allocating can be operable to allocate different processing resources to different radio bearers.

Embodiments further provide a method for controlling TPs in the mobile communication system. The method comprises a step of allocating a cluster of TPs for joint communication with the mobile transceiver to a set of processing resources. The cluster of TPs corresponds to one or more TPs. In further embodiments, the cluster may comprise a set of at least two TPs. The method comprises a further step of processing the radio signals communicated with the mobile transceiver using the set of processing resources.

Embodiments further provide a computer program having a program code for performing one of the above methods, when the computer program is executed on a computer or processor.

### Brief description of the Figures

Some other features or aspects will be described using the following non-limiting embodiments of apparatuses and/or methods and/or computer programs by way of example only, and with reference to the accompanying figures, in which
Fig. 1 illustrates two processing boards in a central unit;
Fig. 2 illustrates a communication network with an embodiment;
Fig. 3 illustrates another embodiment with joint allocation;
Fig. 4 illustrates another embodiment from a conceptual point of view; and
Fig. 5 shows a block diagram of an embodiment of a method for controlling.

### Description of some Embodiments

Various embodiments will now be described in more detail with reference to the accompanying drawings. In the figures, the thicknesses of lines, layers and/or regions may be exaggerated for clarity.

Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple figures carrying the same reference signs, but may not be described multiple times in detail. A detailed description of a component may then apply to that component for all its occurrences.

Realizing a dynamic resource allocation in real worlds systems, may involve modifying the assumption of the existence of a central unit in charge of channel estimation, detection, scheduling, etc. A distributed implementation, where the logical functions carried out in a CoMP box are distributed between different boards could be assumed. However, this distribution of the CoMP functions may involve a latency that may not always be sustainable.

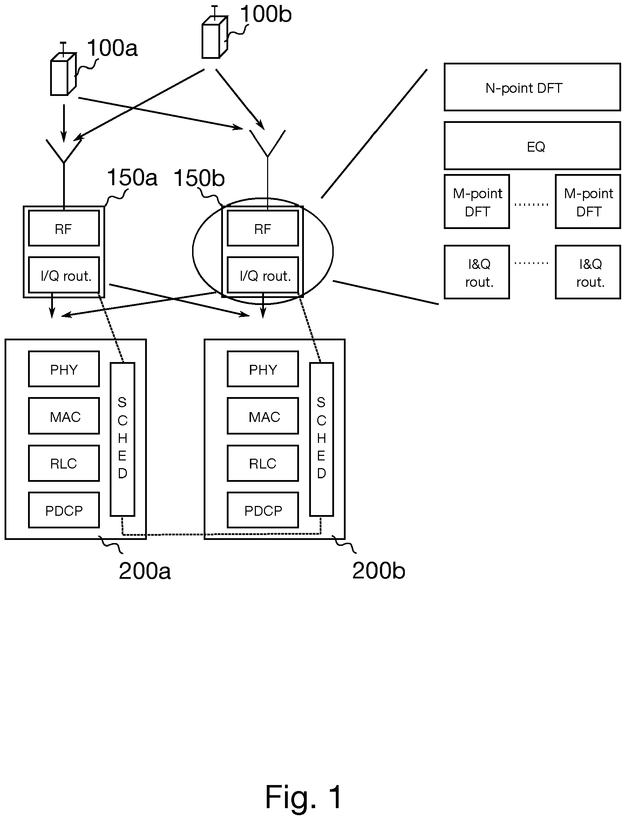

Fig. 1 illustrates an example where two processing boards 200a and 200b cooperate in a CoMP transmission to two mobile transceivers 100a and 100b. Each of the boards 200a, 200b is assumed to be located at a central unit and each of the boards is assumed to operate an LTE or LTE-A protocol stack. The protocol stack comprises Radio Resource Control (RRC), Packet Data Convergence Protocol (PDCP), Radio Link Control (RLC), Medium Access Control (MAC), and at least parts of the PHYsical layer (PHY). Details of these protocols can be found in the respective 3GPP specifications. Moreover, each of the boards 200a, 200b comprises a scheduler for allocating radio resources for transmissions between the mobile transceivers 100a, 100b and TPs 150a, 150b, which are connected to the boards 200a, 200b. As shown in Fig. 1 the respective TPs 100a, 100b comprise Radio Frequency (RF) front ends, down conversion to the complex baseband, and routing of the Inphase (I) and Quadrature (Q) samples. As further shown in Fig. 1 on the right, the processing carried out in the TPs 150a, 150b comprises an N-Point Discrete Fourier Transformation (DFT), EQualization (EQ) and multiple M-point DFTs before I/Q routing. Moreover, Fig. 1 illustrates that the two TPs 150a, 150b receive signals from both mobile transceivers 100a, 100b and thus the I/Q samples of each TP 150a, 150b are provided to the respective boards 200a, 200b. The schedulers of the two boards then have to be coordinated in line with the CoMP transmission.

The I&Q samples are distributed to a unique board 200a, 200b of an anchor base station, where for each of the mobile transceivers 100a, 100b one board 200a, 200b is assumed to be associated to the anchor base-station. Fig. 1 illustrates, based on the assumption of using the LTE frame structure, the split of the signal processing between the two boards 200a, 200b, in which there is a static association of cells to HardWare (HW) resources and a non-optimal I&Q routing.

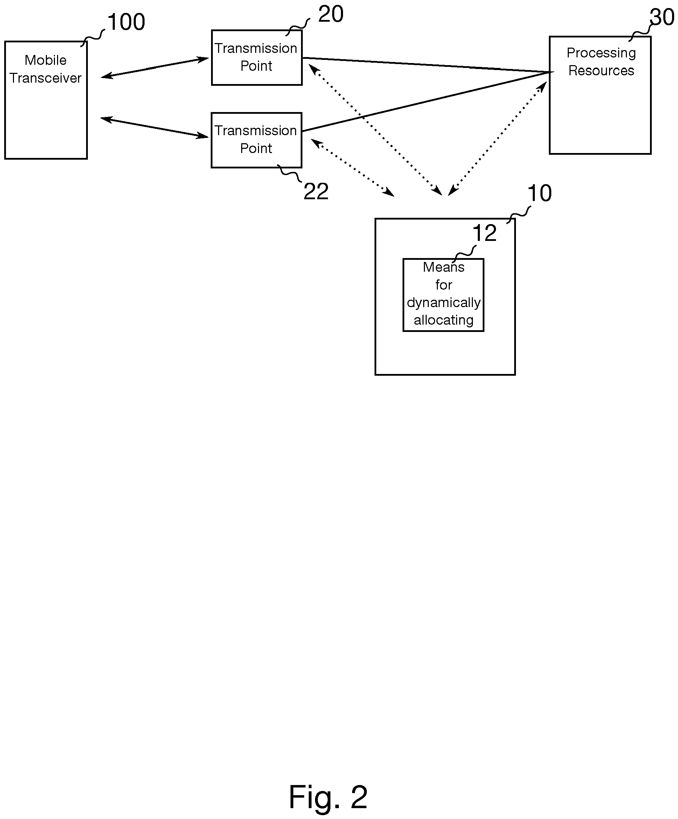

Fig. 2 shows a communication system with an embodiment of an apparatus 10 for controlling TPs 20, 22. The mobile communication system comprises a plurality of TPs 20, 22 operable to communicate radio signals with a mobile transceiver 200, which is indicated by the double sided arrows in Fig. 2. The mobile communication system further comprises a plurality of processing resources 30 operable to process the radio signals communicated with the mobile transceiver 100. The TPs 20, 22 are coupled with the plurality of processing resources 30. In the present embodiment the processing resources 30 correspond to an array of processors providing a processing capability, which is further subdivided into the processing resources 30. A processing resource 30 may correspond to a certain processing capability or power, in some embodiments to the processing power of one or more processors; in other embodiments a single processor may offer multiple processing resources. The means for dynamically allocating 12 is operable to allocate virtual resources, e.g. in terms of a certain amount of instructions per second, of the centralized base band processing unit to the TPC or TPs 20, 22.

As shown in Fig. 2 the apparatus 10 comprises means for dynamically allocating 12 a cluster of TPs 20, 22 for joint communication with the mobile transceiver 100 to a set of processing resources 30 to commonly process the radio signals communicated with the mobile transceiver 100. The cluster of TPs 20, 22 corresponds to a set of one or more TPs 20, 22. The allocations are indicated by the double sided dotted arrows in Fig. 2. The means for dynamically allocating 12 is operable to allocate the set of processing resources 30 to process at least a part of a common base band protocol stack of the cluster of TPs 20, 22 for the mobile transceiver 100.

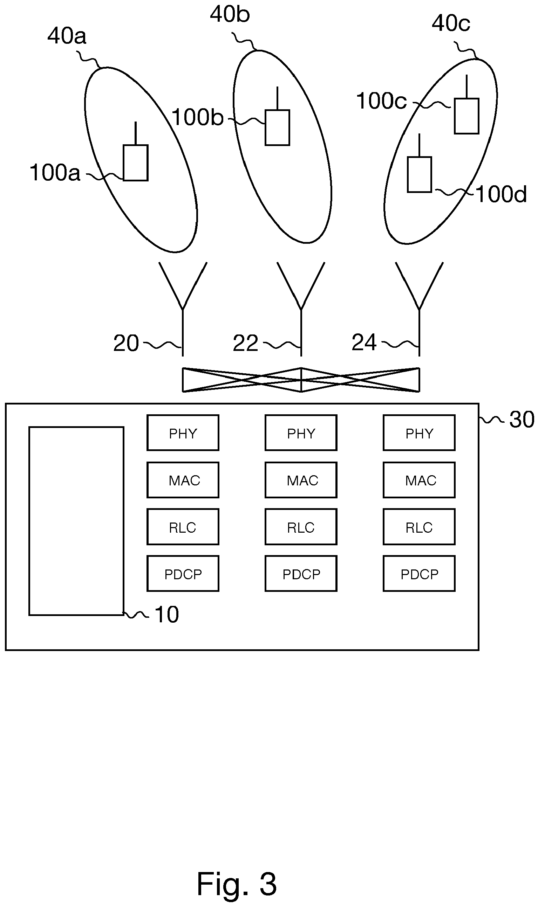

This shall be illustrated further by Fig. 3. Fig. 3 illustrates another embodiment of joint allocation in a communication network with three TPs 20, 22, and 24. As further shown in Fig. 3 three clusters or TPCs are formed using the three TPs 20, 22, 24, where the TPCs are symbolized with the three beams 40a, 40b, and 40c. Furthermore, four mobile transceivers or UEs 100a, 100b, 100c, 100d are displayed, where UE 100a is served by TPC 40a, UE 100b is served by TPC 40b, and UEs 100c and 100d are served by TPC 40c. Moreover, a central base band unit comprising the processing resources 30 is shown in Fig. 3. In the present embodiment it is further assumed that the apparatus 10 for dynamically allocating is located in the central base band unit and further carries out scheduling, clustering and management of virtual machines, which are implemented on a plurality of processors in the central unit. The virtual machines correspond to the processing resources 30.

As further indicated by the antennas in Fig. 3 a TP 20, 22, 24 comprises a radio front end and the plurality of TPs 20, 22, 24 establishes a radio coverage structure for communicating the radio signals with the mobile transceivers 100a, 100b, 100c, 100d. The plurality of processing resources 30 is located at the central base band processing unit, which is coupled to the plurality of TPs 20, 22, 24.

In the embodiment a TPC 40a, 40b, 40c is a set of TPs 20, 22, 24 jointly serving a user or a set of users 100a, 100b, 100c, 100d. The cooperation of the three TPs 20, 22, 24 is also illustrated by the diagram underneath the antennas, indicating the interconnections between the TPs 20, 22, 24. As indicated by the beams in Fig. 3, the TPs20, 22, 24 cooperate. That is to say, in general, the means for dynamically allocating 12 is operable to allocate at least one TP 20, 22, 24 to at least two different clusters of transmission points 40a, 40b, 40c such that the at least two different clusters of transmission points 40a, 40b, 40c are operable to communicate with at least two mobile transceivers 100a, 100b, 100c, 100d. In the embodiment shown in Fig. 3 it is assumed that the three TPs 20, 22, 24 are allocated to all three TPC 40a, 40b, 40c, therefore all TP 20, 22, 24 communicate with all UEs 100a, 100b, 100c, 100d.

Moreover, the TPCs 40a, 40b, 40c are allocated dynamically to the processing resources 30 in the central base band unit. In other words, the means for dynamically allocating 12 is operable to allocate two different TPCs 40a, 40b, 40c to the same set of processing resources for joint communication to at least two mobile transceivers 100a, 100b, 100c, 100d. The means for dynamically allocating 12 is operable to allocate at least one TP 20, 22, 24 to at least two different sets of processing resources 30. That is to say, since a TP 20, 22, 24 can belong to different TPCs 40a, 40b, 40c it may be allocated to different processing resources.

Using a user-centric perspective, users 100c, 100d served by the same clusters 40c are decoded by the same set of resources 30 in the base band pool. Moreover, in order to give a high degree-of-freedom from an algorithm design point-of-view, the signals received within the same cluster 40a, 40b, 40c can be jointly decoded, by going through the same base band protocol stack. Fig. 3 three illustrates the three base band protocol stacks (PHY, MAC, RLC, PDCP) for each of the TPCs 40a, 40b, 40c.

In the embodiment, the TPCs 40a, 40b, 40c are dynamically formed and cluster design is performed by jointly scheduling the users 100a, 100b, 100c, 100d to a given TPC 40a, 40b, 40c. In the given embodiment a fixed set of TPCs 40a, 40b, 40c is used. Interference between TPCs 40a, 40b, 40c can be reduced or minimized by dynamically changing the clusters 40a, 40b, 40c and jointly optimizing the corresponding sets of scheduled users 100a, 100b, 100c, 100d. A base-band stack associated to a given cluster 100a, 100b, 100c, 100d is implemented by exploiting virtualization techniques. In other words, a cluster 40a, 40b, 40c is dynamically allocated to a set of resources 30 within the base-band pool.

In the present embodiment the means for dynamically allocating 12 is operable to provide an identification to each cluster of TPs 40a, 40b, 40c such that the TPs 20, 22, 24 of each cluster 40a, 40b, 40c appear with the same identification to the mobile transceivers 100a, 100b, 100c, 100d. Since the TPs 20, 22, 24 participate in multiple clusters 40a, 40b, 40c they are provided with multiple different identifications. In the present embodiment the identification corresponds to information on a scrambling sequence used for a pilot signal broadcast by the TPs 20, 22, 24. That is to say, each of the TPs 20, 22, 24 may broadcast multiple pilot signals. Each TP 20, 22, 24 may broadcast one pilot signal for each cluster 40a, 40b, 40c it participates in. Thus, the means for dynamically allocating 12 is operable to allocate one or more cell identifications of cells of the mobile communication system to a TP 20, 22, 24.

The means for dynamically allocating 12 is operable to allocate different processing resources 30 for control channel processing of the mobile transceivers 100a, 100b, 100c, 100d and data channel processing of the mobile transceivers 100a, 100b, 100c, 100d. In other words, the granularity based on which the processing resources 30 are allocated in the present embodiment are control plane channels and user plane channels. In other embodiments the granularity may be on user level, on radio bearer level, etc. The present embodiment further comprises means for determining the TPC 40a, 40b, 40c for jointly communicating with the mobile transceivers 100a, 100b, 100c, 100d based on radio conditions specific to the mobile transceivers 100a, 100b, 100c, 100d. The radio condition may correspond to the respective radio channel and interference condition of the UE 100a, 100b, 100c, 100d.

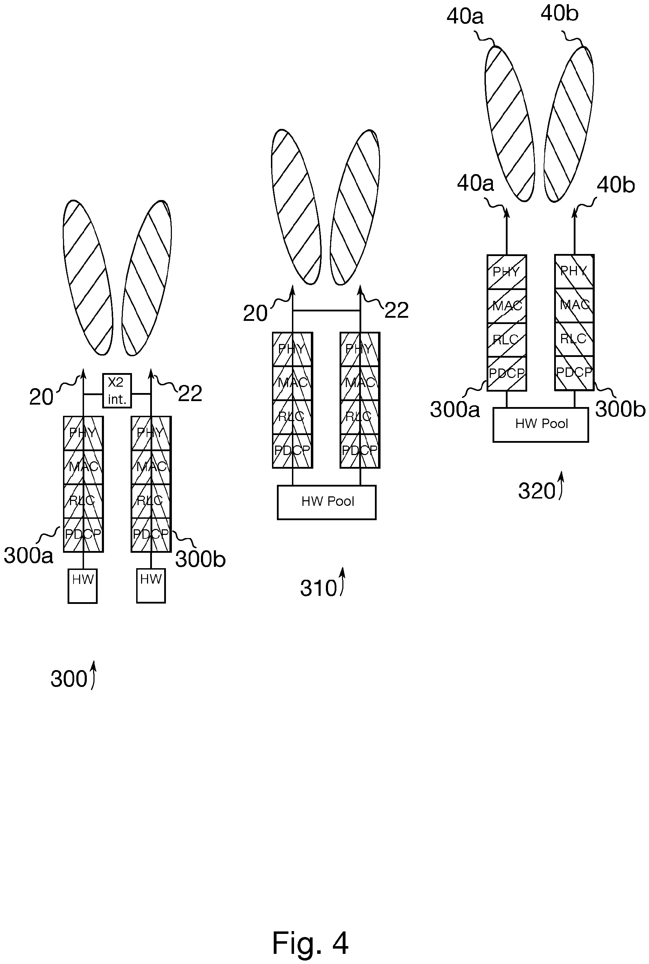

Fig. 4 shows another embodiment and depicts three different concepts 300, 310, and 320. In the concept 300 shown on the very left, two base band protocol stacks 300a, 300b of two TPs 20, 22 are depicted. Their signals are processed on different HW. The two TPs 20, 22 form two clusters 40a, 40b, which are indicated by different hachures. The hachures repeat in the protocol stacks 300a, 300b indicating that each cluster 40a, 40b, or part of each cluster 40a, 40b, is processed in each protocol stack 300a, 300b and on separate HW The two separate processing paths correspond to two eNodeBs, which can communicate with each other using the X2 interface as shown in Fig. 4. The scheduling and clustering can be carried out in a separate entity, which is not depicted in Fig. 4 and which can be coupled to each of the protocol stacks 300a, 300b. In another embodiment the clustering and scheduling can be carried in the HW, which can be assumed to be centralized in a C-RAN. Concept 300 illustrates a cell centric resource allocation with base band processing on cell granularity. CoMP transmission involves using multiple base band stacks to decode one user.

A simple extension to the case of C-RAN involves the signal of a given user to pass through multiple protocol stacks implemented over the same base-band pool, as it is indicated with concept 310 in the middle of Fig. 4. Compared to concept 300 the HW components are now gathered together in a HW pool. Communication between the TPs 20, 22 can now be carried out directly, through the HW pool, respectively. All other components are similar to those described for concept 300. In this case latency can be reduced with respect to concept 300 as different protocol stacks are implemented over the same HW pool. Allocation of TPs to resources can be realized in a static way, i.e. a given cell is associated to some HW resources based on long-term parameters like user-load. As the hachures of the protocol stacks 300a, 300b indicate each cluster 40a, 40b, or part of each cluster 40a, 40b, is processed in each protocol stack 300a, 300b and on separate HW owing to the static assignment of the cluster to the HW resources. Concept 310 is also cell centric, however makes use of base band pooling (HW Pool). CoMP transmission involves using multiple base band stacks to decode one user.

The concept 320 on the right of Fig. 4 illustrates another embodiment, where it can be seen that the protocol stacks 300a and 300b are separated for each cluster 40a and 40b. The TPs 20, 22 are now coordinated such that they form the clusters 40a, 40b based on single protocol stacks 300a, 300b. Differently from the other concepts 300, 310 for C-RAN, the concept 320 relies on a per-UE resource allocation and on a dynamic association of the virtual resources, where CoMP processing can be realized by having users' data to go only through one BB chain, i.e. through on protocol stack. The dynamic allocation allows to gather the TPs of a TPC fast enough to let a single protocol stack suffice for the TPC. It is to be noted that in the two cases 300, 310 the basic RAN entity is represented by a cell. For concept 320 the group of TPs has the same cell-IDentification (ID). Coordination of clusters can be formed by TPs with the same cell-ID or different cell-IDs. Concept 320 is, as opposed to concepts 300 and 310, user centric and uses base band pooling. CoMP transmission involves using one BB stack to decode one user.

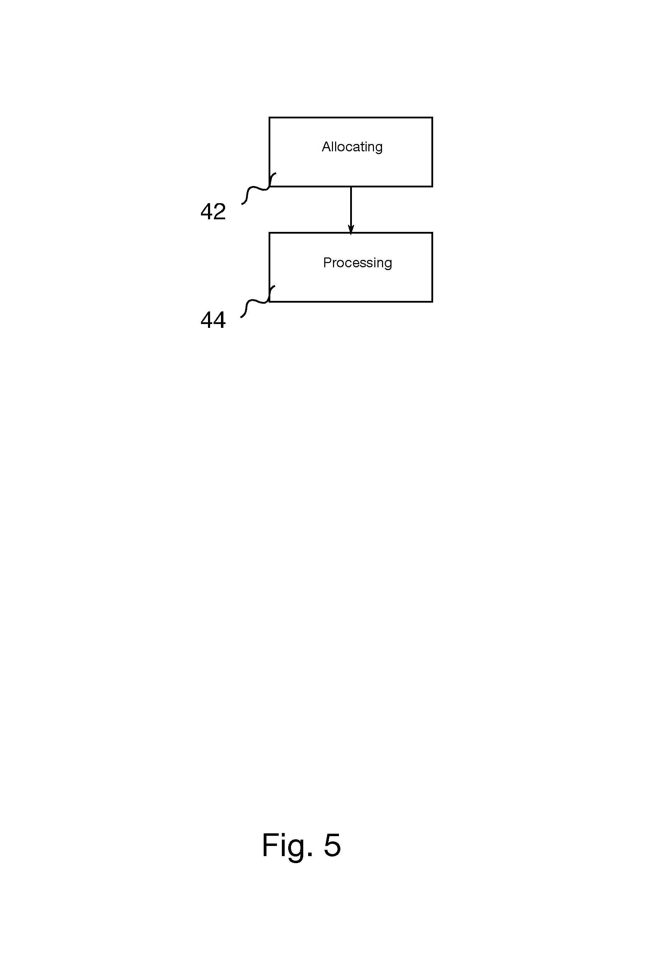

Fig. 5 shows a block diagram of an embodiment a method for controlling transmission points 20, 22, 24 in a mobile communication system. The mobile communication system comprises a plurality of transmission points 20, 22, 24 operable to communicate radio signals with a mobile transceiver 100a, 100b, 100c, 100d and a plurality of processing resources 30 operable to process the radio signals communicated with the mobile transceiver 100a, 100b, 100c, 100d. The method comprises allocating 42 a cluster of transmission points 40a, 40b, 40c for joint communication with the mobile transceiver 100a, 100b, 100c, 100d to a set of processing resources 30, the cluster of transmission points 40a, 40b, 40c corresponding to a set of one or more transmission points 20, 22, 24. The method comprises processing 44 the radio signals communicated with the mobile transceiver 100a, 100b, 100c, 100d.

Embodiments may further provide a computer program having a program code for performing one of the above methods, when the computer program is executed on a computer or processor.

Embodiments may provide the advantage of a UE centric architecture, i.e. clusters are created ad-hoc for serving each user. Virtual resources can be dynamically allocated per cluster. Moreover, embodiments may enable a common virtual scheduler and therewith alleviate CoMP implementation. Furthermore, embodiments may provide a dynamic cell-ID association, thus a given antenna can belong to different cells. Embodiments may further provide a common control channel to optimize mobility with dedicated resources in the pool of resources.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for dynamically allocating", "means for determining", etc., may be provided through the use of dedicated hardware, such as "an allocator", "a determiner", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for controlling transmission points (20; 22; 24) in a mobile communication system, the mobile communication system comprising a plurality of transmission points (20; 22; 24) operable to communicate radio signals with a mobile transceiver (100; 100a; 100b; 100c; 100d) and the mobile communication system comprising a plurality of processing resources (30) operable to process the radio signals communicated with the mobile transceiver (100; 100a; 100b; 100c; 100d), the apparatus (10) comprising
means for dynamically allocating (12) a cluster of transmission points (40a, 40b, 40c) for joint communication with the mobile transceiver (100; 100a; 100b; 100c; 100d) to a set of processing resources (30) to commonly process the radio signals communicated with the mobile transceiver (100; 100a; 100b; 100c; 100d), the cluster of transmission points (40a, 40b, 40c) corresponding to a set of one or more transmission points (20; 22; 24).

2. The apparatus (10) of claim 1, wherein the means for dynamically allocating (12) is operable to allocate the set of processing resources (30) to process at least a part of a common base band protocol stack of the cluster of transmission points (40a; 40b; 40c) for the mobile transceiver (100; 100a; 100b; 100c; 100d).

3. The apparatus (10) of claim 1, wherein a transmission point (20; 22; 24) comprises a radio front end and wherein the plurality of transmission points (20; 22; 24) establishes a radio coverage structure for communicating the radio signals with the mobile transceiver (100; 100a; 100b; 100c; 100d), wherein the plurality of processing resources (30) is located at a central base band processing unit, which is coupled to the plurality of transmission points (20; 22; 24).

4. The apparatus (10) of claim 1, wherein the means for dynamically allocating (12) is operable to allocate at least one transmission point (20; 22; 24) to at least two different clusters of transmission points (40a; 40b; 40c) such that the at least two different clusters of transmission points (40a; 40b; 40c) are operable to communicate with at least two mobile transceivers (100; 100a; 100b; 100c; 100d).

5. The apparatus (10) of claim 1, wherein the means for dynamically allocating (12) is operable to allocate at least one transmission point (20; 22; 24) to at least two different sets of processing resources (30).

6. The apparatus (10) of claim 1, wherein the means for dynamically allocating (12) is operable to allocate two different clusters of transmission points (40a; 40b; 40c) to the same set of processing resources for joint communication to at least two mobile transceivers (100; 100a; 100b; 100c; 100d).

7. The apparatus (10) of claim 1, wherein the means for dynamically allocating (12) is operable to provide an identification to the cluster of transmission points (40a; 40b; 40c) such that the transmission points (20; 22; 24) of the cluster (40a; 40b; 40c) appear with the same identification to the mobile transceiver (100; 100a; 100b; 100c; 100d).

8. The apparatus (10) of claim 1, wherein the means for dynamically allocating (12) is operable to provide at least two different identifications to a transmission point (20; 22; 24), which belongs to at least two clusters of transmission points (40a; 40b; 40c).

9. The apparatus (10) of claim 7, wherein the identification corresponds to information on a scrambling sequence used for a pilot signal broadcast by a transmission point (20; 22; 24).

10. The apparatus (10) of claim 1, wherein the means for dynamically allocating (12) is operable to allocate different processing resources (30) for control channel processing of the mobile transceiver (100; 100a; 100b; 100c; 100d) and data channel processing of the mobile transceiver (100; 100a; 100b; 100c; 100d).

11. The apparatus (10) of claim 1, further comprising means for determining the cluster of transmission points (40a; 40b; 40c) for jointly communicating with the mobile transceiver (100; 100a; 100b; 100c; 100d) based on radio conditions specific to the mobile transceiver (100; 100a; 100b; 100c; 100d).

12. The apparatus (10) of claim 1, wherein the means for dynamically allocating (12) is operable to allocate virtual resources of a centralized base band processing unit to the cluster of transmission points (40a; 40b; 40c).

13. The apparatus (10) of claim 1, wherein the means for dynamically allocating (12) is operable to allocate one or more cell identifications of cells of the mobile communication system to a transmission point (20; 22; 24).

14. A method for controlling transmission points (20; 22; 24) in a mobile communication system, the mobile communication system comprising a plurality of transmission points (20; 22; 24) operable to communicate radio signals with a mobile transceiver (100; 100a; 100b; 100c; 100d) and a plurality of processing resources (30) operable to process the radio signals communicated with the mobile transceiver (100; 100a; 100b; 100c; 100d), the method comprising
allocating (42) a cluster of transmission points (40a; 40b; 40c) for joint communication with the mobile transceiver (100; 100a; 100b; 100c; 100d) to a set of processing resources (30), the cluster of transmission points (40a; 40b; 40c) corresponding to a set of one or more transmission points (20; 22; 24); and
processing (44) the radio signals communicated with the mobile transceiver (100; 100a; 100b; 100c; 100d).

15. A computer program having a program code for performing the method of claim 14, when the computer program is executed on a computer or processor.

## Amended claims

### Amended claims in accordance with Rule 137(2) EPC.

**1.** An apparatus (10) for controlling transmission points (20; 22; 24) in a mobile communication system, the mobile communication system comprising a plurality of transmission points (20; 22; 24) operable to communicate radio signals with a mobile transceiver (100; 100a; 100b; 100c; 100d) and the mobile communication system comprising a plurality of processing resources (30) operable to process the radio signals communicated with the mobile transceiver (100; 100a; 100b; 100c; 100d), the apparatus (10) comprising
means for dynamically allocating (12) a cluster of transmission points (40a, 40b, 40c) for joint communication with the mobile transceiver (100; 100a; 100b; 100c; 100d) to a set of processing resources (30) to commonly process the radio signals communicated with the mobile transceiver (100; 100a; 100b; 100c; 100d), the cluster of transmission points (40a, 40b, 40c) corresponding to a set of one or more transmission points (20; 22; 24), wherein the means for dynamically allocating (12) is operable to allocate the set of processing resources (30) to process at least a part of a common base band protocol stack of the cluster of transmission points (40a; 40b; 40c) for the mobile transceiver (100; 100a; 100b; 100c; 100d).

**2.** The apparatus (10) of claim 1, wherein the means for dynamically allocating (12) is operable to allocate multiple clusters of transmission points (40a, 40b, 40c) for multiple mobile transceivers (100; 100a; 100b; 100c; 100d), wherein each cluster has a separate protocol stack (300a; 300b).

**3.** The apparatus (10) of claim 1, wherein a transmission point (20; 22; 24) comprises a radio front end and wherein the plurality of transmission points (20; 22; 24) establishes a radio coverage structure for communicating the radio signals with the mobile transceiver (100; 100a; 100b; 100c; 100d), wherein the plurality of processing resources (30) is located at a central base band processing unit, which is coupled to the plurality of transmission points (20; 22; 24).

**4.** The apparatus (10) of claim 1, wherein the means for dynamically allocating (12) is operable to allocate at least one transmission point (20; 22; 24) to at least two different clusters of transmission points (40a; 40b; 40c) such that the at least two different clusters of transmission points (40a; 40b; 40c) are operable to communicate with at least two mobile transceivers (100; 100a; 100b; 100c; 100d).

**5.** The apparatus (10) of claim 1, wherein the means for dynamically allocating (12) is operable to allocate at least one transmission point (20; 22; 24) to at least two different sets of processing resources (30).

**6.** The apparatus (10) of claim 1, wherein the means for dynamically allocating (12) is operable to allocate two different clusters of transmission points (40a; 40b; 40c) to the same set of processing resources for communication to at least two mobile transceivers (100; 100a; 100b; 100c; 100d).

**7.** The apparatus (10) of claim 1, wherein the means for dynamically allocating (12) is operable to provide an identification to the cluster of transmission points (40a; 40b; 40c) such that the transmission points (20; 22; 24) of the cluster (40a; 40b; 40c) appear with the same identification to the mobile transceiver (100; 100a; 100b; 100c; 100d).

**8.** The apparatus (10) of claim 1, wherein the means for dynamically allocating (12) is operable to provide at least two different identifications to a transmission point (20; 22; 24), which belongs to at least two clusters of transmission points (40a; 40b; 40c).

**9.** The apparatus (10) of claim 7, wherein the identification corresponds to information on a scrambling sequence used for a pilot signal broadcast by a transmission point (20; 22; 24).

**10.** The apparatus (10) of claim 1, wherein the means for dynamically allocating (12) is operable to allocate different processing resources (30) for control channel processing of the mobile transceiver (100; 100a; 100b; 100c; 100d) and data channel processing of the mobile transceiver (100; 100a; 100b; 100c; 100d).

**11.** The apparatus (10) of claim 1, further comprising means for determining the cluster of transmission points (40a; 40b; 40c) for jointly communicating with the mobile transceiver (100; 100a; 100b; 100c; 100d) based on radio conditions specific to the mobile transceiver (100; 100a; 100b; 100c; 100d).

**12.** The apparatus (10) of claim 1, wherein the means for dynamically allocating (12) is operable to allocate virtual resources of a centralized base band processing unit to the cluster of transmission points (40a; 40b; 40c).

**13.** The apparatus (10) of claim 1, wherein the means for dynamically allocating (12) is operable to allocate one or more cell identifications of cells of the mobile communication system to a transmission point (20; 22; 24).

**14.** A method for controlling transmission points (20; 22; 24) in a mobile communication system, the mobile communication system comprising a plurality of transmission points (20; 22; 24) operable to communicate radio signals with a mobile transceiver (100; 100a; 100b; 100c; 100d) and a plurality of processing resources (30) operable to process the radio signals communicated with the mobile transceiver (100; 100a; 100b; 100c; 100d), the method comprising
allocating (42) a cluster of transmission points (40a; 40b; 40c) for joint communication with the mobile transceiver (100; 100a; 100b; 100c; 100d) to a set of processing resources (30), the cluster of transmission points (40a; 40b; 40c) corresponding to a set of one or more transmission points (20; 22; 24); and processing (44) the radio signals communicated with the mobile transceiver (100; 100a; 100b; 100c; 100d), wherein the processing (44) comprises processing at least a part of a common base band protocol stack of the cluster of transmission points (40a; 40b; 40c) for the mobile transceiver (100; 100a; 100b; 100c; 100d).

**15.** A computer program having a program code for performing the method of claim 14, when the computer program is executed on a computer or processor.
